# EUROPÄISCHE PATENTANMELDUNG

(11) **EP 2 669 072 A1**
(43) Veröffentlichungstag der Anmeldung: **04.12.2013**
(21) Anmeldenummer: 12169837.7
(22) Anmeldetag: 29.05.2012
(51) Int. Cl.: B29C 65/14

(54) **Verfahren zur Herstellung von zumindest zweilagigen thermoplastischen Schaumstoffplatten durch thermisches Verschweißen**

(71) Anmelder: BASF SE, 67056 Ludwigshafen (DE)
(72) Erfinder: Scherzer, Dietrich, 67433 Neustadt (DE); Hahn, Klaus, 67281 Kirchheim (DE); Hahn, Christoph, 67435 Neustadt (DE); Licht, Ulrike, 68309 Mannheim (DE); Merkel, Peter, 67308 Zellertal (DE)
(74) Vertreter: Ellwanger, Arndt

(57) **Zusammenfassung**

Die vorliegende Erfindung betrifft ein Verfahren zur Herstellung von zumindest zweilagigen thermoplastischen Schaumstoffplatten durch thermisches Verschweißen von mindestens zwei dünneren thermoplastischen Schaumstoffplatten zu der zumindest zweilagigen thermoplastischen Schaumstoffplatte, dadurch gekennzeichnet dass auf mindestens einer Oberfläche von mindestens einer dünneren thermoplastischen Schaumstoffplatte mindestens ein Absorber von elektromagnetischer Strahlung aufgetragen wird, wobei mindestens eine dünnere thermoplastische Schaumstoffplatte, auf die der Absorber von elektromagnetischer Strahlung aufgetragen wurde, mit elektromagnetischer Strahlung bestrahlt wird.

## Beschreibung

Die vorliegende Erfindung betrifft ein Verfahren zur Herstellung von zumindest zweilagigen thermoplastischen Schaumstoffplatten durch thermisches Verschweißen von mindestens zwei dünneren thermoplastischen Schaumstoffplatten. Weiterhin betrifft die vorliegende Erfindung die thermoplastischen Schaumstoffplatten als solche, die zumindest zweilagig sind. Die Anzahl der Lagen der thermoplastischen Schaumstoffplatte als solche ergibt sich aus der Anzahl der dünneren thermoplastischen Schaumstoffplatten, die miteinander thermisch verschweißt werden. Wenn beispielsweise drei dünnere thermoplastische Schaumstoffplatten miteinander thermisch verschweißt werden, wird eine dreilagige thermoplastische Schaumstoffplatten als solche erhalten, im Fall von vier dünneren thermoplastische Schaumstoffplatten ergibt sich demzufolge eine vierlagige thermoplastische Schaumstoffplatte als solche.

EP-A 1 318 164 betrifft ein Verfahren zur Herstellung von dicken extrudierten Polystyrol-Schaumstoffplatten (XPS-Platten) durch Verbinden zweier oder mehrerer dünner Platten. Die dicken Platten werden erhalten, indem die dünnen Platten an den Flächen, an denen sie verbunden werden sollen, mit einem organischen Lösungsmittel für Polystyrol gleichmäßig benetzt werden. Dadurch wird die Schaumstoffoberfläche angelöst und die Platten können anschließend miteinander verpresst werden. Als Lösungsmittel eignen sich beispielsweise Kohlenwasserstoffe, Alkohole oder Ether, die einen Siedepunkt zwischen 50 und 250 °C aufweisen. Weiterhin können in dem Verfahren gemäß EP-A 1318 164 die Schäumhäute an den Hauptflächen der miteinander zu verbindenden Platten geschält werden, bevor sie mit dem Lösungsmittel benetzt werden.

EP-A 1 213 119 offenbart ein Verfahren zur Verbindung von mindestens zwei Ausgangsplatten aus thermoplastischem Kunststoffschaum zu einer neuen Platte, wobei die Ausgangsplatten an den Berührungsflächen extrusionshautlos sind und die Verbindung der Ausgangsplatten durch Quellschweißen erfolgt. Zum Quellschweißen werden organische Lösungsmittel eingesetzt, die einen Siedepunkt < 150°C aufweisen, beispielsweise Aceton oder Gemische von organischen Lösungsmitteln mit Wasser.

EP-A 1 566 400 offenbart Schaumstoffplatten mit einer Beschichtung auf mindestens einer Plattenoberfläche, wobei die Beschichtung einen Polymerfilm, der eine Glasübergangstemperatur im Bereich von -60 bis +40°C aufweist, enthält. Die Schaumstoffplatten können beispielsweise einen Partikelschaum aus Polystyrol oder Polyolefin sein. Der Polymerfilm wird auf den Schaumstoffplatten **dadurch** erzeugt, **dass** eine entsprechende Polymerdispersion auf die Schaumstoffplatten aufgetragen wird, die anschließend getrocknet wird. Die Polymerdispersion beziehungsweise der daraus als Beschichtung resultierende Polymerfilm enthält in der Regel ein amorphes, thermoplastisches Polymer, vorzugsweise ein Styrol enthaltene Polymere wie Styrol-Acrylate und Styrol-Butadien-Copolymere eingesetzt. Die Polymerdispersion kann darüber hinaus zahlreiche weitere Stoffe enthalten wie beispielsweise Füllstoffe, Flammschutzmittel oder Infrarot (IR)-absorbierende Feststoffe. Diese Schaumstoffplatten eignen sich zur Haftung von Mörtel- Beton- und Putzsystemen, insbesondere werden sie als Wärmedämmstoff im Bauwesen verwendet. EP-A 1 566 400 offenbart jedoch nicht, dass mehrere einzelne solcher Schaumstoffplatten zu einer mehrlagigen dickeren Schaumstoffplatte zusammengefügt werden können.

Extrudierte Kunststoffschaumplatten von großer Dicke werden in DE-A 101 063 341 offenbart. Mit dem darin beschriebenen Verfahren zur Verbindung von mindestens zwei Ausgangplatten aus Kunststoffschaum zu einer neuen Platte können Platten mit einer Mindestdicke von 70mm hergestellt werden. Vorzugsweise handelt es sich dabei um Flour-chlor-kohlenwasserstofffreien Polystyrol-Schaumplatten. In dem Verfahren werden die Ausgangsplatten, die an der Berührungsfläche extrusionshautlos sind, miteinander verbunden, indem ein diffusionsoffener Kleber oder mechanische Verbindungselemente verwendet werden. Das Verfahren kann alternativ auch so durchgeführt werden, dass kein teilflächiger Verbindung und stellenweise Verschweißung oder stellenweise Verklebung ein nicht diffusionsfähiger Kleber oder nur ein gering diffusionsfähiger Kleber verwendet werden. Als Polystyrol-Schaumplatten eignen sich insbesondere XPS-Platten. In DE-A 101 063 341 sind jedoch keine Angaben enthalten, wie anstelle einer Verklebung die Verschweißung der Ausgangsplatten konkret durchgeführt werden kann, ebenso wenig ist darin offenbart, dass in den verwendeten Klebstoffen, die auch Reaktionskleber und/oder Hot-Melt-Kleber umfassen können, weitere Komponenten wie Flammschutzmittel oder Absorber enthalten sein können.

Ein weiteres Verfahren zu Verbindung von mindestens zwei Ausgangsplatten aus Kunststoffschaumplatten zu einer neuen Platte, die vorzugsweise eine Polystyrol-Schaumstoffplatte mit einer Mindestdicke von 70mm ist, wird in EP-A 1 471 125 offenbart. In diesem Verfahren werden ebenfalls Ausgangsplatten verwendet, die zumindest an der Berührungsfläche extrusionshautlos sind, und es erfolgt eine Verbindung der Ausgangsplatten mit einem diffusionsoffenen Kleber, wobei ein Hot-Melt-Kleber und/oder Reaktionskleber verwendet werden. Der Kleber besteht aus Isocyanat und mindestens einer weiteren Reaktionsgruppe, die ein Harz ist, dass im schmelzflüssigen Zustand klebrig ist und der Klebeverbindung eine Frühfestigkeit gibt. Das Isocyanat und das Harz reagieren dabei zu Polyurethan, wodurch die Klebewirkung mit einer Endfestigkeit erzielt wird.

Thermische Dämmstoffe aus XPS-Kompositmaterialien, die dreilagig sind, werden in WO 2012/016991 beschrieben. Die Dreilagigkeit der Kompositmaterialien ergibt sich dadurch, dass eine untere, eine zentrale und eine obere XPS-Platte zu dem XPS-Kompositmaterial vereinigt werden, wobei jede nach außen gerichtete Seite dieses XPS-Kompositmaterials eine Extrusionshaut umfasst. Während die Kontaktseiten der zentralen XPS-Platte ebenfalls eine Extrusionshaut aufweisen, wird diese bei den entsprechenden Kontaktseiten der oberen sowie unteren XPS-Platte entfernt. Die einzelnen XPS-Platten werden zum XPS-Kompositmaterial durch thermisches Verschweißen an den Kontaktflächen zusammengefügt. WO 2012/016991 enthält jedoch keine Informationen darüber, ob beim thermischen Verschweißen irgendwelche sonstigen Stoffe auf die zu verschweißenden Oberflächen aufgetragen werden oder ob alternativ oder zusätzlich zum Verschweißen Klebstoffe verwendet werden können.

WO 2009/047487 offenbart mehrschichtige Kompositmaterialien, die eine erste Schicht aus einem geschlossen porigen Schaum eines Thermoplasten und eine zweite Schicht aus einem Faserverstärkten Harz, die auf der Oberfläche der ersten Schicht aufgebracht ist, umfassen. Der geschlossenzellige Schaum hat eine mittlere Zellgröße von weniger als 100 µm, vorzugsweise handele es sich dabei um eine Mischung aus Polystyrol und Polyphenylenoxid (PS/PPO). Diese schichtförmigen Kompositmaterialien eignen sich zur Herstellen von größeren Strukturen beispielsweise für Rotorblätter von Windkraftanlagen.

Die der vorliegenden Erfindung zugrunde liegende Aufgabe besteht in der Bereitstellung von neuen zwei- oder mehrlagigen thermoplastischen Schaumstoffplatten als solchen bzw. einem entsprechenden Verfahren zur Herstellung von solchen zumindest zweilagigen thermoplastischen Schaumstoffplatten.

Gelöst wird für die Aufgabe durch ein Verfahren zur Herstellung von zumindest zweilagigen Verfahren zur Herstellung von zumindest zweilagigen thermoplastischen Schaumstoffplatten durch thermisches Verschweißen von mindestens zwei dünneren thermoplastischen Schaumstoffplatten zu der zumindest zweilagigen thermoplastischen Schaumstoffplatte, **dadurch gekennzeichnet, dass** auf mindestens einer Oberfläche von mindestens einer dünneren thermoplastischen Schaumstoffplatte mindestens ein Absorber von elektromagnetischer Strahlung aufgetragen wird, wobei mindestens eine dünnere thermoplastische Schaumstoffplatte, auf die der Absorber von elektromagnetischer Strahlung aufgetragen wurde, mit elektromagnetischer Strahlung bestrahlt wird.

Die mit dem erfindungsgemäßen Verfahren hergestellten zumindest zweilagigen thermoplastischen Schaumstoffplatten zeichnen sich dadurch aus, dass die entsprechende Anzahl an dünneren thermoplastischen Schaumstoffplatten auf sehr stabile Weise zu den zumindest zweilagigen thermoplastischen Schaumstoffplatten zusammengefügt werden können. Die zumindest zweilagigen thermoplastischen Schaumstoffplatten als solche weisen eine hohe Zugfestigkeit auf, vorzugsweise eine Zugfestigkeit von > 0,15 N/mm².

Das stabile Zusammenfügen der einzelnen dünneren Schaumstoffplatten erfolgt erfindungsgemäß durch thermisches Verschweißen unter Verwendung eines Absorbers von elektromagnetischer Strahlung sowie durch Bestrahlung der Platten mit elektromagnetischer Strahlung. Es ist somit nicht erforderlich, dass die einzelnen dünneren thermoplastischen Schaumstoffplatten unter zu Hilfename eines Klebstoffes oder eines Lösungsmittels (Quellschweißen) zusammengefügt bzw. verklebt werden. Im Rahmen der vorliegenden Erfindung können jedoch zusätzlich zum thermischen Verschweißen (unter Verwendung des entsprechenden Absorbers von elektromagnetischer Strahlung) gegebenenfalls auch konventionelle Klebstoffe eingesetzt werden, um den Zusammenhalt bzw. die Klebewirkung der einzelnen dünneren thermoplastischen Schaumstoffplatten weiter zu erhöhen.

Ein besonders stabiler Zusammenhalt der einzelnen dünneren thermoplastischen Schaumstoffplatten wird dann erzielt, wenn die mit einem entsprechenden Absorber von elektromagnetischer Strahlung versehenen dünneren thermoplastischen Schaumstoffplatten mit elektromagnetischer Strahlung von geeigneter Wellenlänge (beispielsweise IR-Strahlung oder Mikrowellen-Strahlung) bestrahlt werden, wodurch auf der beschichteten Schaumstoffoberfläche Temperaturen oberhalb der Glasübergangtemperatur des verwendeten Thermoplasten erzielt werden (die Oberfläche wird also auf Temperaturen oberhalb der Glasübergangstemperatur erhitzt), anschließend können die einzelne dünneren thermoplastischen Schaumstoffplatten miteinander verpresst werden. Die mit dem erfindungsgemäßen Verfahren hergestellten zumindest zweilagigen thermoplastischen Schaumstoffplatten, insbesondere diejenigen, bei denen die Oberfläche der Schaumstoffplatten auf Temperaturen oberhalb der Glasübergangstemperatur erhitzt werden, haben als weiteren vorteilhafte Eigenschaft eine hohe Wasserdampfdurchlässigkeit und/oder Festigkeit der miteinander thermisch verschweißten Schaumstoffplatten.

Aufgrund der Anwesenheit des Absorbers für elektromagnetische Strahlung wird beim thermischen Verschweißen zudem bewirkt, dass nur die mit dem Absorber versehene Oberfläche der entsprechenden dünneren thermoplastischen Schaumstoffplatte selektiv erhitzt wird. Demzufolge werden beim Verschweißen keine Löcher in den Plattenkörper eingebrannt bzw. dies erfolgt nur in einem äußerst geringen Umfang. Dies hat zur Folge, dass die entsprechenden dünneren thermoplastischen Schaumstoffplatten beim thermischen Verschweißen nicht verzogen werden, sodass ein exaktes Anhaften der einzelnen dünneren thermoplastischen Schaumstoffplatten zu beobachten ist, was sich wiederum positiv auf die Festigkeit der zumindest zweilagigen thermoplastischen Schaumstoffplatten auswirkt.

Ein weiterer Vorteil durch das Aufbringen der Absorber von elektromagnetischer Strahlung auf die entsprechenden Oberflächen der dünneren thermoplastischen Schaumstoffplatten, die miteinander thermisch verschweißt werden, ist darin zu sehen, dass die Strahlungsdurchlässigkeit der zumindest zweilagigen thermoplastischen Schaumstoffplatten als solche reduziert wird und/oder das Wärmeleitfähigkeitsverhalten verbessert werden kann. Die Wärmeleitfähigkeit kann um bis zu 10 % vermindert werden im Vergleich zu herkömmlichen Platten, bei denen kein Absorber von elektromagnetischer Strahlung verwendet wird. Eine Verminderung der Wärmeleitfähigkeit bedeutet ein (Wärme-) Dämmungseffekt.

Sofern an den thermisch zu verschweißenden Stellen zusammen mit dem Absorber für elektromagnetische Strahlung zusätzlich ein Flammschutzmittel eingesetzt wird, weisen die entsprechenden zweilagigen thermoplastischen Schaumstoffplatten verbesserte Eigenschaften hinsichtlich ihres Flammverhaltens auf, dass heißt sie bestehen Brandteste nach den ISO-Normen B1 und/oder B2. Sofern der Absorber von elektromagnetischer Strahlung zusammen mit einem Klebstoff, insbesondere einer wässrigen Klebstoffdispersion, auf die dünneren thermoplastischen Schaumstoffplatten aufgetragen wird, ist infolge der Anwesenheit des Absorbers bzw. der Durchführung des thermischen Verschweißens ein schnelleres Abtrocknen des Klebers festzustellen, was ein weiterer Vorteil darstellt. Infolge der Anwesenheit des Absorbers kann der Klebstoff viel schneller Energie aufnehmen, was zu einem schnelleren Abtrocknen und gegebenenfalls auch besseren Klebeverhalten führt.

Ein besonders festes Anhaften der miteinander zu verschweißenden dünneren thermoplastischen Schaumstoffplatten wird im Rahmen des erfindungsgemäßen Verfahrens dann festgestellt, sofern mindestens eine der zu verschweißenden Oberflächen der dünneren thermoplastischen Schaumstoffplatten schaumhautfrei ist. Insbesondere ist dies festzustellen, wenn pro zu verschweißendem Plattenpaar die jeweils thermisch zu verschweißende Oberfläche der beiden dünneren thermoplastischen Schaumstoffplatten schaumhautfrei ist. Durch das Entfernen der Schaumhaut wird eine Plattenoberfläche erzeugt, die den Absorber von elektromagnetischer Strahlung besser aufnehmen kann und folglich auch besser thermisch zu verschweißen ist im Vergleich zu Schaumstoffplatten, bei denen die Schaumhaut (Extrusionshaut) nicht entfernt worden ist. Schaumstoffplatten mit Schaumhaut weisen eine viel glattere Oberfläche auf, die in aller Regel jedoch nicht planparallel mit der Oberfläche der zu verschweißenden zweiten Platte ist. Demzufolge wird häufig ein Verziehen der Platten beim Verschweißungsvorgang beobachtet, was unter Umständen zu einem reduzierten Zusammenhalt/reduzierten Festigkeit des zumindest zweilagigen thermoplastischen Schaumstoffplattens nach dem thermischen Verschweißen führt.

Nachfolgend werden die erfindungsgemäß zumindest zweilagigen thermoplastischen Schaumstoffplatten als solche sowie das erfindungsgemäße Herstellungsverfahren dieser Schaumstoffplatten durch thermisches Verschweißen näher definiert.

Die erfindungsgemäße thermoplastische Schaumstoffplatte ist zumindest zweilagig, sie kann also genau zwei Lagen aufweisen oder dreilagig, vierlagig, fünflagig oder noch höher lagig sein. Wie vorstehend bereits ausgeführt, ergibt sich die Anzahl der Lagen der thermoplastischen Schaumstoffplatte als solche aus der Anzahl der dünneren thermoplastischen Schaumstoffplatten, die miteinander thermisch verschweißt werden. Im Falle einer zweilagigen thermoplastischen Schaumstoffplatte als solche werden also zwei dünnere thermoplastische Schaumstoffplatten miteinander thermisch verschweißt. Bei einer drei-oder vierlagigen thermoplastischen Schaumstoffplatten als solcher werden somit drei bzw. vier dünnere thermoplastische Schaumstoffplatten miteinander thermisch verschweißt. Sofern noch höher lagige thermoplastische Schaumstoffplatten als solche hergestellt werden soll, beispielsweise eine zehnlagige thermoplastische Schaumstoffplatte, müssen demzufolge die der Anzahl der Lagen entsprechende Anzahl an dünneren thermoplastischen Schaumstoffplatten, beispielsweise zehn dünnere thermoplastischen Schaumstoffplatten, miteinander thermisch verschweißt werden. Vorzugsweise ist die erfindungsgemäße thermoplastische Schaumstoffplatte zweilagig, dreilagig oder vierlagig, insbesondere ist die erfindungsgemäße thermoplastische Schaumstoffplatte zweilagig.

Die zum thermischen Verschweißen verwendeten dünneren thermoplastischen Schaumstoffplatten entsprechen hinsichtlich ihrer chemischer Zusammensetzung den im Rahmen des erfindungsgemäße Verfahrens hergestellten zumindest zweilagigen thermoplastischen Schaumstoffplatten als solchen (ohne Berücksichtigung der im Rahmen des Verschweißungsvorganges auf die Oberflächen aufgebrachten Absorber von elektromagnetischer Strahlung oder den optionalen Bindemitteln, Klebstoffen, etc.). Die jeweils thermisch miteinander zu verschweißenden dünneren thermoplastischen Schaumstoffplatten weisen vorzugsweise dieselbe Dimensionen und/oder dieselbe chemische Zusammensetzung auf. Gegebenenfalls können aber auch thermoplastische Schaumstoffplatten mit unterschiedlichen Dimensionen und/oder unterschiedlicher chemischer Zusammensetzung miteinander thermisch verschweißt werden. Werden beispielsweise drei dünnere thermoplastische Schaumstoffplatten miteinander thermische verschweißt, die allesamt die gleiche Dimensionierung aufweisen und (beispielsweise) ein extrudierter Polystyrol-Schaumstoff (XPS-Schaumstoff) sind, wird dadurch ein dreilagiger thermoplastischer extrudierter Polystyrol-Schaumstoff (XPS) erhalten.

Die Dimensionierung der thermisch miteinander zu verschweißenden dünneren thermoplastischen Schaumstoffplatten ist beliebig. Hinsichtlich ihrer Länge und Breite können sie Maße im Zentimeterbereich bis hin zu mehreren Metern aufweisen. Hinsichtlich der dritten Dimension (Dicke) sind theoretisch ebenfalls beliebige Maße denkbar, in der Praxis weisen die dünneren thermoplastischen Schaumstoffplatten eine Dicke von 10 bis 150 mm auf. Die Dicke der im erfindungsgemäßen Verfahren hergestellten zumindest zweilagigen thermoplastischen Schaumstoffplatten ergibt sich somit aus der Gesamt-Dicke der insgesamt eingesetzten dünneren thermoplastischen Schaumstoffplatten. Insbesondere wenn im Rahmen des Herstellungsverfahrens ein Verpressungsschritt durchgeführt wird, ist die Dicke der zumindest zweilagigen thermoplastischen Schaumstoffplatten als solche geringer als die Summe der jeweiligen Dicken der eingesetzten dünneren thermoplastischen Schaumstoffplatten.

Die zum thermischen Verschweißen eingesetzten dünneren thermoplastischen Schaumstoffplatten als solche sind dem Fachmann prinzipiell bekannt. Geeignete thermoplastische Schaumstoffplatten sind beispielsweise in EP-A 1 566 490 oder in Form von Blends in WO 2009/047487 offenbart.

Vorzugsweise sind die dünneren thermoplastischen Schaumstoffplatten ein Partikelschaumstoff oder ein Extrusionsschaumstoff. Weiterhin ist es bevorzugt, dass die dünneren thermoplastischen Schaumstoffplatten eine Dichte < 200 g/l aufweisen. Mehr bevorzugt sind die dünneren thermoplastischen Schaumstoffplatten ein Extrusionsschaumstoff. Der Extrusionsschaumstoff ist vorzugsweise ein Polystyrol oder aus Styrol hergestelltes Copolymer. Gegebenenfalls können auch Gemische aus solchen Polymeren eingesetzt werden. Besonders bevorzugt ist der Extrusionsschaumstoff extrudiertes Polystyrol (XPS), der beispielsweise unter der Bezeichnung Styrodur® von der BASF SE kommerziell erhältlich ist.

Sofern der Extrusionsschaumstoff auf Basis von (mindestens) einem aus Styrol hergestellten Copolymer ist (auch als Styrolcopolymerisate bezeichnet), bedeutet dies, dass zur Herstellung dieses Copolymeren neben dem Monomeren Styrol mindestens ein weiteres Monomer erforderlich ist. Vorzugsweise wird dieses Copolymer aus Styrol und einem weiteren Monomeren hergestellt. Als Comonomere von Styrol eignen sich prinzipiell alle mit Styrol polymerisierbaren Monomere. Vorzugsweise sind mindestens 50 Gew.-% Styrol in diesem Copolymer einpolymerisiert.

Vorzugsweise weist ein aus Styrol hergestelltes Copolymer als Comonomer zu Styrol ein Monomer auf, das ausgewählt ist aus α-Methylstyrol, kernhalogenierten Styrolen, kernalkylierten Styrolen, Acrylnitril, Acrylsäureester, Methacrylsäureester, N-Vinylverbindungen, Maleinsäureanhydrid, Butadien, Divinylbenzol oder Butandioldiacrylat. Acrylsäureester sowie Methacrylsäureester sind vorzugsweise erhältlich aus Alkoholen mit 1 bis 8 Kohlenstoffatomen. Eine geeignete N-Vinylverbindung ist beispielsweise Vinylcarbazol. Bevorzugte aus Styrol hergestellte Copolymere sind Styrol-Acrylnitril-Copolymere (SAN) oder Acrylnitril-Butadien-Styrol-Copolymere (ABS).

Im erfindungsgemäßen Verfahren wird mindestens ein Absorber von elektromagnetischer Strahlung (im nachfolgenden Text auch als "Absorber" bezeichnet) auf mindestens eine Oberfläche von mindestens einer dünnen thermoplastischen Schaumstoffplatte aufgetragen. Vorzugsweise wird pro zu verschweißendem Plattenpaar auf nur eine thermisch zu verschweißende Oberfläche der dünneren thermoplastischen Schaumstoffplatten mindestens ein Absorber von elektromagnetischer Strahlung aufgetragen. Verfahren zum Auftragen des Absorbers von elektromagnetischer Strahlung sind dem Fachmann bekannt, beispielsweise kann der Absorber großflächig auf die entsprechende Oberfläche der dünneren thermoplastischen Schaumstoffplatte aufgetragen werden. Vorzugsweise wird der Absorber von elektromagnetischer Strahlung als Dispersion eingesetzt, insbesondere als wässrige Dispersion. Gegebenenfalls kann er auch mit Hilfe eines Schmelzklebers (siehe auch den nachfolgenden Text) aufgebracht werden. Wie nachfolgend aufgeführt kann der Absorber auch gemeinsam mit weiteren Verbindungen wie Bindemitteln oder Klebstoffen, vorzugsweise in Dispersionsform, aufgetragen werden. Das Auftragen auf die Plattenoberfläche kann beispielsweise durch Pinseln, Rakeln, Walzen, Sprühen oder Drucken erfolgen.

Absorber von elektromagnetischer Strahlung als solche sind dem Fachmann bekannt. Geeignete Suszeptoren für Radiofrequenz Strahlung sind in WO 2006/050013, WO 99/47621 und WO 012/1725 beschrieben. Bevorzugte Suszeptoren sind polymere Ionomere.

Absorber von anderen Strahlungsarten sind beispielsweise in WO 2009/071499 auf den Seiten 9 bis 11 beschrieben. Vorzugsweise wird im Rahmen der vorliegenden Erfindung der Absorber von elektromagnetischer Strahlung in Abhängigkeit von der zum thermischen Verschweißen verwendeten elektromagnetischen Strahlung ausgewählt. Erfolgt beispielsweise das thermische Verschweißen unter Verwendung von Mikrowellen-Strahlen, wird vorzugsweise ein Absorber von elektromagnetischer Strahlung ausgewählt, der über eine gute Absorptionsfähigkeit im Wellenlängenbereich von Mikrowellen verfügt.

Geeignete Absorber sind beispielsweise organische IR-Absorber, organische Mikrowellen-Absorber, anorganische IR-Absorber oder anorganische Mikrowellen-Absorber.

Unter IR-Absorber ist im Rahmen dieser Anmeldung eine Verbindung zu verstehen, die aufgebracht in einer Schichtdicke von 50 µm bei mindestens einer Wellenlänge von Strahlung des Wellenlängenbereichs von 700 nm bis 1 eine Absorption ≥90 % zeigt. Bevorzugt ist der Wellenlängenbereich von >700 nm bis 2000 nm, sowie die Wellenlängen 9,6 µm und 10,6 µm.

Unter Mikrowellen-Absorber ist im Rahmen dieser Anmeldung eine Verbindung zu verstehen, die Mikrowellen des Wellenlängenbereichs von > 1 mm bis 1 m absorbiert. Besonders bevorzugt werden die technisch relevanten Frequenzen von 2,45 Ghz, 433-444 MHz und 902-928 MHz.

Vorzugsweise ist der Absorber von elektromagnetischer Strahlung ein Infrarot (IR)-Absorber und/oder Mikrowellen Absorber, insbesondere Graphit oder Ruß. Weiterhin ist es bevorzugt, dass die elektromagnetische Strahlung IR-Strahlen und/oder Mikrowellen-Strahlen sind.

Die Durchführung des thermischen Verschweißens als solchen ist dem Fachmann bekannt. Der Fachmann kennt weiterhin die hierfür erforderlichen Geräte zur Erzeugung der geeigneten elektromagnetischen Strahlung. Beispielsweise kann eine beschichtete Platte im Sekunden- bis Minutenbereich in einem Mikrowellenofen oder mit einem IR-Strahler bestrahlt werden.

Wie vorstehend bereits erwähnt, können außer dem Absorber von elektromagnetischer Strahlung auch weitere Stoffe mit anderen Verwendungseigenschaften gemeinsam mit dem Absorber auf die zu verschweißende Oberfläche der entsprechenden dünneren thermoplastischen Schaumstoffplatten aufgetragen werden. Geeignete weitere Stoffe können beispielsweise Klebstoffe (Kleber), Bindemittel und/oder Flammschutzmittel, pH-Regulatoren sowie gegebenenfalls Lösungsmittel sein. Klebstoffe, Bindemittel, Flammschutzmittel, pH-Regulatoren sowie Lösungsmittel als solche sind dem Fachmann bekannt.

In einer Ausführungsform der vorliegenden Erfindung wird auf mindestens einer Oberfläche von mindestens einer dünneren thermoplastischen Schaumstoffplatte ein Gemisch aufgetragen wird, das i) mindestens einen Absorber von elektromagnetischer Strahlung, ii) mindestens einen Klebstoff, iii) mindestens ein Bindemittel und/oder iv) mindestens ein Flammschutzmittel enthält, wobei in dem Gemisch außer der Komponente i) mindestens eine der Komponenten ii) bis iv) zwingend enthalten ist.

Geeignete Bindemittel im Rahmen der vorliegenden Erfindung sind ausgewählt aus Polyacrylaten und Copolymeren davon, Polystyrol und Copolymeren davon, Ethylen/Acrylat-Copolymeren, Ethlyen/Vinylacetat-Copolymeren, Polyurethanen und Polyurethan/Acrylat-Hybriden. Bevorzugte Copolymere von Polystyrol sind Styrol/Butadien-Copolymere.

Bevorzugte Bindemittel sind ausgewählt aus wässrigen Dispersionen oder Lösungen von Polyacrylaten und Copolymeren davon, Polystyrol und Copolymeren davon, Ethylen/Acrylat-Copolymeren, Ethlyen/Vinylacetat-Copolymeren, Polyurethanen und Polyurethan/Acrylat-Hybriden. Bevorzugte Copolymere von Polystyrol sind Styrol/Butadien-Copolymere.

Als Bindemittel besonders bevorzugt sind Dispersionen mit hohem Anteil an Polystyrol oder Copolymer davon, insbesondere mit einem hohen Anteil an Polystyrol. Diese Dispersionen werden vorzugsweise verwendet, wenn im erfindungsgemäßen Verfahren die dünneren thermoplastischen Schaumstoffplatten (Ausgangsplatten) ebenfalls Polystyrol oder Copolymere davon enthalten, weil dann die Eigenschaften der zumindest zweilagigen thermoplastischen Schaumstoffplatten (Verbundplatten) aufgrund der Verwendung des besagten Bindemittels noch weniger von den Ausgangsplatten abweichen.

Bevorzugte Flammschutzmittel im Rahmen der vorliegenden Erfindung sind ausgewählt aus einem Phosphat, einem Phosphit, einem Phosphonat, einem Polyphosphonat, Melamin, einem Metalloxidhydrat, insbesondere einem Aluminiumoxidhydrat oder einer halogenierten organischen Verbindung.

Bevorzugte Phosphate und Phosphonate sind ausgewählt aus DMMP (Dimethymethylphosphonat), DMPP (Dimethylpropylphosphonat), TCEP (Tris(chlorethyl)phosphat), TCPP (Tris(chlorpropyl)phosphat), TDCPP (Tris(dichlorisopropyl)phosphat), TPP (Triphenylphosphat), TEHP (Tris-(2-ethylhexyl)phosphat), TKP (Trikresylphosphat) oder TCEP (Trichlorpropylphosphat).

Ein besonders bevorzugtes Flammschutzmittel ist Dimethylpropylphosphonat (DMPP), das beispielsweise kommerziell erhältlich ist unter der Bezeichnung Levagard DMPP von der Firma Lanxess. In einer Ausführungsform der vorliegenden Erfindung ist Blähgraphit bevorzugt, der ebenfalls als Absorber verwendet werden kann.

Als Klebstoffe können prinzipiell alle dem Fachmann bekannten Klebstoffe eingesetzt werden. Bevorzugt sind solche Klebstoffe, deren Trocknung, Abbinden oder Erweichen durch die gewählte Absorber/Stahlungskombination besonders gefördert wird. Beispiele für geeignete Klebstoffe sind Polyurethan-Klebstoffe in Form von Dispersionen, die kommerziell erhältlich sind beispielsweise als Luphen D 259 U der BASF SE. Ebenso sind auch wässrige Haftklebstoff-Dispersionen geeignet. Ebenso eignet sich wässrige Montagekleber, die beispielsweise in EP-B 1 268 698 offenbart sind. Ebenso sind sogenannten Heißschmelzklebstoffe (Hot-Melt-Kleber) geeignet. Bevorzugte Klebstoffe sind wässrige Kaschierklebstoffe, Schmelzklebstoffe und/oder ein- und zweikomponentige Reaktionsklebstoffe.

Bei wässrigen Kaschierklebstoffen ist nach dem Auftrag des Klebstoffs eine Trocknung und eine thermische Aktivierung notwendig. Beides kann durch Strahlung beschleunigt werden. Besonders bevorzugt sind Dispersionen auf Basis von Polyurethanen und Polyacrylaten.

Schmelzklebstoffe lassen sich gut durch Strahlung klebefähig machen, Beispiele finden sich in DE-A 3802881, WO 2004/076578, US-A 5238975 oder WO 0034404.

Auch ein- und zweikomponentige Reaktionsklebstoffe, besonders Polyurethane, lassen sich durch Strahlung in Verbindung mit dem Absorber schneller und gezielter zur Reaktion bringen. Beispiele hierzu sind in EP-A 1313812 offenbart.

In einer bevorzugten Ausführungsform der vorliegenden Erfindung wird mindestens ein Absorber von elektromagnetischer Strahlung auf mindestens eine Oberfläche von mindestens einer dünneren thermoplastischen Schaumstoffplatte aufgetragen wird, wobei die Oberfläche schäumhautfrei ist. Der Vollständigkeit halber wird darauf hingewiesen, dass bei Verwendung eines Extrusionsschaumstoffes die entsprechende Oberfläche auch als extrusionshautfrei anstelle von schäumhautfrei bezeichnet wird.

In einer weiteren bevorzugten Ausführungsform in der vorliegenden Erfindung wird ein Gemisch aus mindestens einem Absorber für elektromagnetische Strahlung und mindestens einem Bindemittel auf die thermisch zu verschweißenden Oberflächen der entsprechenden dünneren thermoplastischen Schaumstoffplatten aufgetragen, wobei die jeweilige Oberfläche vorzugsweise schäumhautfrei ist.

Die Menge an Absorber (fest) auf einer Oberfläche beträgt normalerweise 0.01g/m² bis 100 g/m², bevorzugt 0,1g/m² bis 50 g/m². Besonders bevorzugt 1g/m² bis 20 g/m². Die Absorber können einseitig oder beidseitig aufgetragen werden.

In einer weiteren bevorzugten Ausführungsform der vorliegenden Erfindung wird das Verfahren so durchgeführt, dass jede thermisch zu verschweißende Oberfläche der dünneren thermoplastischen Schaumstoffplatten schäumhautfrei ist.

In einer weiteren bevorzugten Ausführungsform der vorliegenden Erfindung wird mindestens eine dünnere thermoplastische Schaumstoffplatte, auf die der Absorber von elektromagnetischer Strahlung aufgetragen wurde, durch die Bestrahlung mit elektromagnetischer Strahlung auf Temperaturen oberhalb der Glasübergangstemperatur der thermoplastischen Schaumstoffplatte erhitzt.

Weiterhin ist es bevorzugt, dass in erfindungsgemäßen Verfahren ein Verpressen der thermisch zu verschweißenden zusammengefügten dünnen thermoplastischen Schaumstoffplatten durchgeführt wird. Das Verpressen erfolgt im Allgemeinen im Sekunden- bis Minutenbereich und/oder bei einem Pressdruck von 0,1 bis 0,5 bar. Das Verpressen kann vor oder nach der Bestrahlung mit elektromagnetischer Strahlung erfolgen, vorzugsweise erfolgt das Verpressen nach der Bestrahlung.

Weiterhin ist es bevorzugt, dass in erfindungsgemäßen Verfahren ein Trocknungsschritt durchgeführt wird, nachdem der Absorber von elektromagnetischer Strahlung auf die Oberfläche der dünneren thermoplastischen Schaumstoffplatten aufgetragen wurde. Das Trocknen findet normalerweise für eine Dauer von 10 Minuten bis 2 Stunden und/oder bei einer Temperatur im Bereich von 50 bis 100°C statt.

In einer weiteren bevorzugten Ausführungsform in der vorliegenden Erfindung umfasst das Verfahren die folgenden Schritte:
a) Bereitstellen von mindestens zwei dünneren thermoplastischen Schaumstoffplatten, wobei jede thermisch zu verschweißende Oberfläche der dünneren thermoplastischen Schaumstoffplatten schäumhautfrei ist,
b) flächiges Aufbringen eines wässrigen Gemisches enthaltend mindestens einen Absorber von elektromagnetischer Strahlung und mindestens ein Bindemittel auf (pro zu verschweißendem Plattenpaar) mindestens eine thermisch zu verschweißende Oberfläche der dünneren thermoplastischen Schaumstoffplatten,
c) Trocknen der dünneren thermoplastischen Schaumstoffplatten, die in Schritt b) erhalten wurden,
d) Bestrahlen der getrockneten dünneren thermoplastischen Schaumstoffplatten mit elektromagnetischer Strahlung,
e) Zusammenfügen der dünneren thermoplastischen Schaumstoffplatten an den zu verschweißenden Oberflächen,
f) Verpressen der zusammengefügten dünneren thermoplastischen Schaumstoffplatten unter Erhalt einer zumindest zweilagigen thermoplastischen Schaumstoffplatte.

In der vorstehenden bevorzugten Ausführungsform können die Schritte c) und d) gegebenenfalls auch gleichzeitig ausgeführt werden. Alternativ kann in Schritt b) auch anstelle eines wässrigen Gemisches ein Schmelzkleber aufgetragen werden, wobei der Schmelzkleber mindestens einen Absorber von elektromagnetischer Strahlung und mindestens ein Bindemittel enthält.

In einer alternativen Ausführungsform in der vorliegenden Erfindung wird das vorstehend beschriebene Verfahren mit den Schritten a) bis f) so durchgeführt, dass die Schritte a) bis c) gleich sind, jedoch die Schritte d) bis f) durch die Schritte g) bis e) ersetzt werden, wobei die Schritte g) bis i) wie folgt definiert sind:
g) Zusammenfügen der dünneren thermoplastischen Schaumstoffplatte an den zu verschweißenden Stellen, wobei pro zu verschweißendem Plattenpaar mindestens eine getrocknete dünnere thermoplastische Schaumstoffplatte gemäß Schritt c) eingesetzt wird,
h) gegebenenfalls Verpressen der zusammengefügten dünneren thermoplastischen Schaumstoffplatten,
i) Bestrahlung der zusammengefügten oder gegebenenfalls verpressten dünneren thermoplastischen Schaumstoffplatten unter Erhalt einer zumindest zweilagigen thermoplastischen Schaumstoffplatte.

Ein weiterer Gegenstand der vorliegenden Erfindung sind die thermoplastischen Schaumstoffplatten als solche, die zumindest zweilagig sind und nach dem vorstehend beschriebenen Verfahren herstellbar sind.

Nachfolgend wird die Erfindung anhand von Beispielen verdeutlicht.

Soweit nicht anders angegeben, sind alle Prozentangaben in Gewichtsprozent (Gew.-%). FG bedeutet Festgewicht. Styrodur® ist ein Handelsprodukt der BASF SE in Form eines extrudierten Polystyrol-Schaumstoffs (XPS).

### Erfindungsgemäße Beispiele

1) Bereitstellung einer wässrigen Ruß-Bindemittel-Formulierung: 1 kg eines wässrigen Emulsionspolymerisates (FG 66 %) aus 33 % Butylacrylat, 26 % Styrol, 31 % Methylmethacrylat, 10 % Methacrylsäure (Bindemitteldispersion) wird mit 280 g Polyethylenglykol 200 (weiterer wasserlöslicher Binder), 12 g Ethanolamin (pH Regulator) und 180,5 g Dispers Schwarz 0076 (BASF SE) Rußdispersion (FG 32 %) (Absorberdispersion) versetzt.
   Auf eine Styrodurplatte ohne Schäumhaut (100 x 100 mm² mit einer Dicke von 45 mm wird so viel wässrige Ruß-Bindemittel-Formulierung mit einem Pinsel aufgetragen, dass nach Trocknung 30 min bei 75 °C 80-120 g/m² trockene Ruß/Binderschicht vorliegen. Auf die trockene Ruß/Binderschicht wird eine zweite analoge Styrodurplatte ohne Schäumhaut aufgelegt und der Verbund für 60 Sekunden mit 2 kg belastet. In einem haushaltsüblichen Mikrowellenofen wird dann 3 min bei 800 W bestrahlt.
   Die Haftzugfestigkeit (gemäß DIN EN 1607) beträgt 0,15N/m² (gemessen nach 24 Stunden Lagerung bei Raumtemperatur).
2) Bereitstellung einer wässrigen Ruß-Bindemittel-Formulierung: Ein wässriges Emulsionspolymerisat (FG 54 %) aus 99 pphm Styrol und 1 pphm Methacrylsäure, geregelt mit 20 pphm Ethyl-hexyl-thioglykolat (EHTG) (stabilisiert mit 1 % Disponil FES 77; 0,2 % Dowfax 2A1, mit NH3 auf pH 3 gestellt) (Bindemitteldispersion), wird mit 10 % f/f Dispers Schwarz 0076 (BASF SE) Rußdispersion (Absorberdispersion) versetzt.

Auf eine Styrodurplatte (100 mm × 100 mm mit einer Dicke von 45 mm) ohne Schäumhaut wird so viel wässrige Ruß-Bindemittel-Formulierung mit einem Pinsel aufgetragen, dass nach Trocknung 30 min bei 75 °C 80-120 g/m² trockene Ruß-/Binder-Schicht vorliegen. Die Ruß-/Binder-Schicht wird unter einem IR-Strahler (IRE 380, OPTRON Messtechnik GmbH) für 5 Sekunden erhitzt und sofort eine zweite analoge Styrodurplatte ohne Schäumhaut aufgelegt und mit 2 kg für 60 Sekunden belastet.

Die Haftzugfestigkeit (gemäß DIN EN 1607) beträgt 0,19 N/m² (gemessen nach 24 Stunden Lagerung bei Raumtemperatur).

### Vergleichsbeispiele

3) Bereitstellung einer wässrigen Ruß-Bindemittel-Formulierung: 1 kg eines wässrigen Emulsionspolymerisates (FG 66 %) aus 33 % Butylacrylat, 26 % Styrol, 31 % Methylmethacrylat, 10 % Methacrylsäure (Bindemitteldispersion) wird mit 280 g Polyethylenglykol 200 (weiterer wasserlöslicher Binder), 12 g Ethanolamin (pH Regulator) und 180,5 g Dispers Schwarz 0076 (BASF SE) Rußdispersion (FG 32 %) (Absorberdispersion) versetzt.
   Auf eine Styrodurplatte ohne Schäumhaut (100 x 100 mm² mit einer Dicke von 45 mm) wird so viel wässrige Ruß-Bindemittel-Formulierung mit einem Pinsel aufgetragen, dass nach Trocknung 30 min bei 75 °C 80-120 g/m² trockene Rußschicht vorliegen. Auf die trockene Rußschicht wird eine zweite analoge Styrodurplatte ohne Schäumhaut aufgelegt und der Verbund für 60 Sekunden mit 2 kg belastet.
   Die Haftzugfestigkeit (gemäß DIN EN 1607) beträgt 0,05 N/m² (gemessen nach 24 Stunden Lagerung bei Raumtemperatur).
4) Bereitstellung einer wässrigen Ruß-Bindemittel-Formulierung: Ein wässriges Emulsionspolymerisat (FG 54 %) aus 99 pphm Styrol und 1 pphm Methacrylsäure, geregelt mit 20 pphm Ethyl-hexyl-thioglykolat (EHTG) (stabilisiert mit 1 % Disponil FES 77; 0,2 % Dowfax 2A1, mit NH3 auf pH 3 gestellt) (Bindemitteldispersion) wird mit 10 % f/f Dispers Schwarz 0076 (BASF SE) Rußdispersion (Absorberdispersion) versetzt.

Auf eine Styrodurplatte (100 mm x 100 mm mit einer Dicke von 45 mm) ohne Schäumhaut wird so viel wässrige Ruß-Bindemittel-Formulierung mit einem Pinsel aufgetragen, dass nach Trocknung 30 min bei 75 °C 80-120 g/m² trockene Ruß-/Binder-Schicht vorliegen. Auf die Platte mit der Ruß-/Binder-Schicht wird sofort eine zweite analoge Styrodurplatte ohne Schäumhaut aufgelegt und mit 2 kg für 60 Sekunden bei 40 °C belastet.

Die Haftzugfestigkeit (gemäß DIN EN 1607) beträgt 0,01 N/m² (gemessen nach 24 Stunden Lagerung bei Raumtemperatur).

## Patentansprüche

1. Verfahren zur Herstellung von zumindest zweilagigen thermoplastischen Schaumstoffplatten durch thermisches Verschweißen von mindestens zwei dünneren thermoplastischen Schaumstoffplatten zu der zumindest zweilagigen thermoplastischen Schaumstoffplatte, **dadurch gekennzeichnet, dass** auf mindestens einer Oberfläche von mindestens einer dünneren thermoplastischen Schaumstoffplatte mindestens ein Absorber von elektromagnetischer Strahlung aufgetragen wird, wobei mindestens eine dünnere thermoplastische Schaumstoffplatte, auf die der Absorber von elektromagnetischer Strahlung aufgetragen wurde, mit elektromagnetischer Strahlung bestrahlt wird.

2. Verfahren gemäß Anspruch 1, **dadurch gekennzeichnet, dass** der Absorber von elektromagnetischer Strahlung ein Infrarot (IR)-Absorber und/oder Mikrowellen-Absorber, insbesondere Graphit oder Ruß ist, und/oder dass die elektromagnetische Strahlung IR-Strahlen und/oder Mikrowellen-Strahlen sind.

3. Verfahren gemäß Anspruch 1 oder 2, **dadurch gekennzeichnet, dass** auf mindestens einer Oberfläche von mindestens einer dünneren thermoplastischen Schaumstoffplatte ein Gemisch aufgetragen wird, das
i) mindestens einen Absorber von elektromagnetischer Strahlung,
ii) mindestens einen Klebstoff, iii) mindestens ein Bindemittel und/oder
iv) mindestens ein Flammschutzmittel enthält, wobei in dem Gemisch außer der Komponente i) mindestens eine der Komponenten ii) bis iv) zwingend enthalten ist.

4. Verfahren gemäß Anspruch 3, **dadurch gekennzeichnet, dass** das Bindemittel ausgewählt ist aus wässrigen Dispersionen oder Lösungen von Polyacrylaten und Copolymeren, Polystyrol und Copolymeren davon, insbesondere Styrol/Butadien-Copolymeren, Ethylen/Acrylat-Copolymeren, Ethlyen/Vinylacetat-Copolymeren, Polyurethanen und Polyurethan/Acrylat- Hybriden.

5. Verfahren gemäß Anspruch 3 oder 4, **dadurch gekennzeichnet, dass** das Flammschutzmittel ausgewählt ist aus einem Phosphat, einem Phosphit, einem Phosphonat, einem Polyphosphonat, Melamin, einem Aluminiumoxidhydrat oder einer halogenierten organischen Verbindung.

6. Verfahren gemäß einem der Ansprüche 3 bis 5, **dadurch gekennzeichnet, dass** der Klebstoff ein Heißschmelzklebstoff (Hot-Melt-Kleber) ist.

7. Verfahren gemäß einem der Ansprüche 1 bis 6, **dadurch gekennzeichnet, dass** die dünnere thermoplastische Schaumstoffplatte ein Partikelschaumstoff oder ein Extrusionsschaumstoff ist, vorzugsweise ein Extrusionsschaumstoff von Polystyrol oder von einem aus Styrol hergestellten Copolymer.

8. Verfahren gemäß einem der Ansprüche 1 bis 7, **dadurch gekennzeichnet, dass** mindestens ein Absorber von elektromagnetischer Strahlung auf mindestens eine Oberfläche von mindestens einer dünneren thermoplastischen Schaumstoffplatte aufgetragen wird, wobei die Oberfläche schäumhautfrei ist.

9. Verfahren gemäß einem der Ansprüche 1 bis 8, **dadurch gekennzeichnet, dass** mindestens eine dünnere thermoplastische Schaumstoffplatte, auf die der Absorber von elektromagnetischer Strahlung aufgetragen wurde, durch die Bestrahlung mit elektromagnetischer Strahlung auf Temperaturen oberhalb der Glasübergangstemperatur der thermoplastischen Schaumstoffplatte erhitzt wird.

10. Verfahren gemäß einem der Ansprüche 1 bis 9, **dadurch gekennzeichnet, dass** jede thermisch zu verschweißende Oberfläche der dünneren thermoplastischen Schaumstoffplatten schäumhautfrei ist und/oder dass pro zu verschweißendem Plattenpaar auf nur eine thermisch zu verschweißende Oberfläche der dünneren thermoplastischen Schaumstoffplatten mindestens ein Absorber von elektromagnetischer Strahlung aufgetragen wird.

11. Verfahren gemäß einem der Ansprüche 1 bis 10 umfassend die folgenden Schritte
a) Bereitstellen von mindestens zwei dünneren thermoplastischen Schaumstoffplatten, wobei jede thermisch zu verschweißende Oberfläche der dünneren thermoplastischen Schaumstoffplatten schäumhautfrei ist,
b) flächiges Aufbringen eines wässrigen Gemisches enthaltend mindestens einen Absorber von elektromagnetischer Strahlung und mindestens ein Bindemittel auf (pro zu verschweißendem Plattenpaar) mindestens eine thermisch zu verschweißende Oberfläche der dünneren thermoplastischen Schaumstoffplatten,
c) Trocknen der dünneren thermoplastischen Schaumstoffplatten, die in Schritt b) erhalten wurden,
d) Bestrahlen der getrockneten dünneren thermoplastischen Schaumstoffplatten mit elektromagnetischer Strahlung,
e) Zusammenfügen der dünneren thermoplastischen Schaumstoffplatten an den zu verschweißenden Oberflächen,
f) Verpressen der zusammengefügten dünneren thermoplastischen Schaumstoffplatten unter Erhalt einer zumindest zweilagigen thermoplastischen Schaumstoffplatte.

12. Verfahren gemäß Anspruch 11, **dadurch gekennzeichnet, dass** anstelle der Schritte d) bis f) die Schritte g) bis i) durchgeführt werden:
g) Zusammenfügen der dünneren thermoplastischen Schaumstoffplatte an den zu verschweißenden Stellen, wobei pro zu verschweißendem Plattenpaar mindestens eine getrocknete dünnere thermoplastische Schaumstoffplatte gemäß Schritt c) eingesetzt wird,
h) gegebenenfalls Verpressen der zusammengefügten dünneren thermoplastischen Schaumstoffplatten,
i) Bestrahlung der zusammengefügten oder gegebenenfalls verpressten dünneren thermoplastischen Schaumstoffplatten unter Erhalt einer zumindest zweilagigen thermoplastischen Schaumstoffplatte.

13. Thermoplastische Schaumstoffplatte, die zumindest zweilagig ist, herstellbar nach einem Verfahren gemäß einem der Ansprüche 1 bis 12.

## Geänderte Patentansprüche

### Geänderte Patentansprüche gemäss Regel 137(2) EPÜ.

**1.** Verfahren zur Herstellung von zumindest zweilagigen thermoplastischen Schaumstoffplatten durch thermisches Verschweißen von mindestens zwei dünneren thermoplastischen Schaumstoffplatten zu der zumindest zweilagigen thermoplastischen Schaumstoffplatte, **dadurch gekennzeichnet, dass** auf mindestens einer Oberfläche von mindestens einer dünneren thermoplastischen Schaumstoffplatte mindestens ein Absorber von elektromagnetischer Strahlung aufgetragen wird, wobei mindestens eine dünnere thermoplastische Schaumstoffplatte, auf die der Absorber von elektromagnetischer Strahlung aufgetragen wurde, mit elektromagnetischer Strahlung bestrahlt wird und wobei die Oberfläche von mindestens einer dünneren thermoplastischen Schaumstoffplatte, auf die mindestens ein Absorber von elektromagnetischer Strahlung aufgetragen wird, schäumhautfrei ist.

**2.** Verfahren gemäß Anspruch 1, **dadurch gekennzeichnet, dass** der Absorber von elektromagnetischer Strahlung ein Infrarot (IR)-Absorber und/oder Mikrowellen-Absorber, insbesondere Graphit oder Ruß ist, und/oder dass die elektromagnetische Strahlung IR-Strahlen und/oder Mikrowellen-Strahlen sind.

**3.** Verfahren gemäß Anspruch 1 oder 2, **dadurch gekennzeichnet, dass** auf mindestens einer Oberfläche von mindestens einer dünneren thermoplastischen Schaumstoffplatte ein Gemisch aufgetragen wird, das i) mindestens einen Absorber von elektromagnetischer Strahlung, ii) mindestens einen Klebstoff, iii) mindestens ein Bindemittel und/oder iv) mindestens ein Flammschutzmittel enthält, wobei in dem Gemisch außer der Komponente i) mindestens eine der Komponenten ii) bis iv) zwingend enthalten ist.

**4.** Verfahren gemäß Anspruch 3, **dadurch gekennzeichnet, dass** das Bindemittel ausgewählt ist aus wässrigen Dispersionen oder Lösungen von Polyacrylaten und Copolymeren, Polystyrol und Copolymeren davon, insbesondere Styrol/Butadien-Copolymeren, Ethylen/Acrylat-Copolymeren, Ethlyen/Vinylacetat-Copolymeren, Polyurethanen und Polyurethan/Acrylat- Hybriden.

**5.** Verfahren gemäß Anspruch 3 oder 4, **dadurch gekennzeichnet, dass** das Flammschutzmittel ausgewählt ist aus einem Phosphat, einem Phosphit, einem Phosphonat, einem Polyphosphonat, Melamin, einem Aluminiumoxidhydrat oder einer halogenierten organischen Verbindung.

**6.** Verfahren gemäß einem der Ansprüche 3 bis 5, **dadurch gekennzeichnet, dass** der Klebstoff ein Heißschmelzklebstoff (Hot-Melt-Kleber) ist.

**7.** Verfahren gemäß einem der Ansprüche 1 bis 6, **dadurch gekennzeichnet, dass** die dünnere thermoplastische Schaumstoffplatte ein Partikelschaumstoff oder ein Extrusionsschaumstoff ist, vorzugsweise ein Extrusionsschaumstoff von Polystyrol oder von einem aus Styrol hergestellten Copolymer.

**8.** Verfahren gemäß einem der Ansprüche 1 bis 7, **dadurch gekennzeichnet, dass** mindestens eine dünnere thermoplastische Schaumstoffplatte, auf die der Absorber von elektromagnetischer Strahlung aufgetragen wurde, durch die Bestrahlung mit elektromagnetischer Strahlung auf Temperaturen oberhalb der Glasübergangstemperatur der thermoplastischen Schaumstoffplatte erhitzt wird.

**9.** Verfahren gemäß einem der Ansprüche 1 bis 8, **dadurch gekennzeichnet, dass** jede thermisch zu verschweißende Oberfläche der dünneren thermoplastischen Schaumstoffplatten schäumhautfrei ist und/oder dass pro zu verschweißendem Plattenpaar auf nur eine thermisch zu verschweißende Oberfläche der dünneren thermoplastischen Schaumstoffplatten mindestens ein Absorber von elektromagnetischer Strahlung aufgetragen wird.

**10.** Verfahren gemäß einem der Ansprüche 1 bis 9 umfassend die folgenden Schritte
a) Bereitstellen von mindestens zwei dünneren thermoplastischen Schaumstoffplatten, wobei jede thermisch zu verschweißende Oberfläche der dünneren thermoplastischen Schaumstoffplatten schäumhautfrei ist,
b) flächiges Aufbringen eines wässrigen Gemisches enthaltend mindestens einen Absorber von elektromagnetischer Strahlung und mindestens ein Bindemittel auf (pro zu verschweißendem Plattenpaar) mindestens eine thermisch zu verschweißende Oberfläche der dünneren thermoplastischen Schaumstoffplatten,
c) Trocknen der dünneren thermoplastischen Schaumstoffplatten, die in Schritt b) erhalten wurden,
d) Bestrahlen der getrockneten dünneren thermoplastischen Schaumstoffplatten mit elektromagnetischer Strahlung,
e) Zusammenfügen der dünneren thermoplastischen Schaumstoffplatten an den zu verschweißenden Oberflächen,
f) Verpressen der zusammengefügten dünneren thermoplastischen Schaumstoffplatten unter Erhalt einer zumindest zweilagigen thermoplastischen Schaumstoffplatte.

**11.** Verfahren gemäß Anspruch 10, **dadurch gekennzeichnet, dass** anstelle der Schritte d) bis f) die Schritte g) bis i) durchgeführt werden:
g) Zusammenfügen der dünneren thermoplastischen Schaumstoffplatte an den zu verschweißenden Stellen, wobei pro zu verschweißendem Plattenpaar mindestens eine getrocknete dünnere thermoplastische Schaumstoffplatte gemäß Schritt c) eingesetzt wird,
h) gegebenenfalls Verpressen der zusammengefügten dünneren thermoplastischen Schaumstoffplatten,
i) Bestrahlung der zusammengefügten oder gegebenenfalls verpressten dünneren thermoplastischen Schaumstoffplatten unter Erhalt einer zumindest zweilagigen thermoplastischen Schaumstoffplatte.

**12.** Thermoplastische Schaumstoffplatte, die zumindest zweilagig ist, herstellbar nach einem Verfahren gemäß einem der Ansprüche 1 bis 11.
